# EUROPÄISCHE PATENTSCHRIFT

(11) **EP 3 292 601 B1**
(45) Veröffentlichungstag und Bekanntmachung des Hinweises auf die Patenterteilung: **03.08.2022**
(21) Anmeldenummer: 16721156.4
(22) Anmeldetag: 06.05.2016
(51) Int. Cl.: H02G 3/06, F16L 5/02, H02G 3/08

(54) **KABEL-/LEITUNGSEINFÜHRUNG**
CABLE/LINE LEAD-IN
ENTRÉE D'INTRODUCTION DE CÂBLE/LIGNE

(30) Priorität: 06.05.2015 DE 102015208400
(43) Veröffentlichungstag der Anmeldung: 14.03.2018
(73) Patentinhaber: Eaton Protection Systems IP GmbH & Co. KG, 12529 Schönefeld (DE)
(72) Erfinder: NAUMANN, Reiner, 68239 Mannheim (DE); WISCHGOLL, Lars, 69412 Eberbach (DE)
(74) Vertreter: Novagraaf Group
(86) Internationale Anmeldenummer: PCT/EP2016/060139
(87) Internationale Veröffentlichungsnummer: WO 2016/177860

(56) Entgegenhaltungen:
- EP-A1- 1 033 801
- WO-A1-2013/161532
- DE-A1- 10 027 486
- DE-C1- 4 322 032
- DE-U1-202009 009 807
- US-A1- 2015 069 750

## Beschreibung

Die Erfindung betrifft eine Kabel-/Leitungseinführung. Eine solche Kabel-/Leitungseinführung dient zum Durchführen von Kabeln oder Leitungen durch eine Gehäusewand in ein entsprechendes Gehäuse einer elektrischen Vorrichtung. Die Kabel-/Leitungseinführung wird in der Regel aus wenigstens einer Einführhülse gebildet, die die Gehäusewand durchsetzt und mittels eines zumindest stellenweise radial nach außen abstehenden Anlageflansches von einer Seite an der Gehäusewand anliegt. Um entsprechend ein Kabel oder eine Leitung innerhalb der Einführhülse zu fixieren, weist die Kabel-/Leitungseinführung weiterhin zumindest ein Klemmteil auf, welches auf einen Verbindungsabschnitt der Einführhülse in Richtung Anlageflansch lösbar aufsetzbar ist. Beim Aufsetzen dieses Klemmteils erfolgt ein Verklemmen des Kabels bzw. der Leitung innerhalb der Einführhülse.

Die Einführhülse wird außerdem auf einem dem Verbindungsabschnitt gegenüberliegenden Endeinsteckabschnitt ebenfalls relativ zur Gehäusewand fixiert, indem beispielsweise eine Kontermutter auf diesen Endeinsteckabschnitt aufschraubbar ist.

In gewissen Fällen ist es notwendig, die Kabel-/Leitungseinführung zu ersetzen, weil diese beispielsweise beschädigt ist. Um dabei zu verhindern, dass beispielsweise die Kabelleitungen von der entsprechenden elektrischen Vorrichtung getrennt werden müssen, um eine neue Kabel-/Leitungseinführung anzuordnen, wird in der DE 4322032 C1 vorgeschlagen, Einführhülse und Klemmteil aus wenigstens zwei im Wesentlichen in Axialrichtung geteilten Einzelelementen zusammenzusetzen und entlang entsprechender Trennkanten dieser Einzelelemente zu deren positionsgenauem Zusammensetzen Führungs- und/oder Positioniermittel anzuordnen. Dadurch besteht die Möglichkeit, ohne Lösen entsprechender Kabel oder Leitungen eine Kabel-/Leitungseinführung durch eine Neue zu ersetzen, indem die entsprechenden Einzelelemente auf Kabel oder Leitung aufgesetzt und miteinander verbunden werden.

Zwar erlaubt diese Lösung ein Austauschen der Kabel-/Leitungseinführung ohne ein Abschalten der entsprechenden elektrischen Vorrichtung und ohne Lösen des Kabels bzw. der Leitung, allerdings ist diese Lösung nicht für explosionsgefährdete Bereiche einsetzbar. In solchen Bereichen müssen entsprechende Schutzarten realisiert werden, durch die elektrische Betriebsmittel für gefährliche Umgebungsbedingungen geeignet sind. Das heißt, die Kabel-/Leitungseinführung muss eine gewisse Schutzart erfüllen, die beispielsweise nach dem sogenannten IP-Code eingeteilt ist. Dabei steht IP für "Ingress Protection". So wird beispielsweise in Industrieanlagen typischerweise IP54 und in Schallschränken IP20 verbaut. Nur falls eine solche entsprechende Schutzart realisiert wird, kann auch unter erschwerten Umweltbedingungen sichergestellt werden, dass die elektrischen Geräte und Anlagen arbeiten. Die erschwerten Umweltbedingungen betreffen beispielsweise bestimmte Temperaturbereiche, korrosive Belastungen, Beständigkeit gegen aggressive Medien wie Feuchte, Wasser, Dämpfe, Säuren oder dergleichen. Die entsprechende Schutzart soll dabei auch über eine längere Zeit stabil aufrecht erhalten werden.

WO 2013/161532 A1 zeigt eine Kabelklemme mit einer Hülse mit einem Klemm-Außengewinde, einem Befestigungs-Außengewinde und einem Flanschteil; einer Gegenmutter mit C-förmigem Querschnitt, die auf das Befestigungs-Außengewinde geschraubt wird; einer Spannkappe, die auf das Klemm-Außengewinde geschraubt wird; einer Gummimuffe, die im Inneren der Hülse angeordnet ist, in den ein Kabel eingeführt wird; und einer Klemmstruktur, die die Gummimuffe in radialer Richtung nach innen drückt. Sowohl die Hülse als auch die Gummimuffe sind in einer zur Längsrichtung des Kabels senkrechten Richtung in zwei Teile unterteilt. Die Spannkappe besteht aus einem äußeren Kappenkörper und einem inneren Kappenkörper, die einen C-förmigen Querschnitt haben. Die Kerbe am äußeren Kappenkörper und die Kerbe am inneren Kappenkörper sind an unterschiedlichen Positionen voneinander in Drehrichtung der Spannkappe vorgesehen.

DE 43 22 032 C1 offenbart eine Vorrichtung zur abgedichteten Verlegung von Rohren, Leitungen und dergleichen Langformteilen durch Gerätewandungen und dergleichen Bauteile, bestehend aus einem Doppelnippel mit endseitigen Gewindestutzen und dazwischen angeordnetem Polygonansatz für ein Werkzeug, wobei der Nippel an seinem einen Ende einen innen umlaufenden Anschlagkragen aufweist, an welchem sich ein Dichtkörper abstützt, der mittels einer auf das andere Ende des Nippels aufschraubbaren Druckschraube in Form einer Überwurfmutter mit Anschlagkragen vorspannbar ist und der vom Rohr, der Leitung oder dem Langformteil durchgreifbar ist, wobei ferner der Dichtkörper mindestens eine in Längsrichtung verlaufende Teilungsfuge aufweist, dadurch gekennzeichnet, dass der Doppelnippel und die Druckschraube jeweils aus mindestens zwei Teilen mit in Nippellängsrichtung verlaufenden Trennstellen bestehen, wobei die Einzelteile der Druckschraube durch Haltemittel lagerichtig zusammenhaltbar sind, mittels derer die Druckschraube den bei bestimmungsgemäßem Gebrauch auftretenden Kräften standhält.

DE 100 27486 A1 zeigt ein Kabeldurchführungssystem dass unter anderem ein zweiteiliges Kabeldurchführelement und ein zweiteiliges Reduzierelement aufweist. Das Kabeldurchführelement wird durch zwei identische Halbschalen gebildet, die jeweils Arretierbohrungen für eine Vormontage aufweisen.

Der vorliegenden Erfindung liegt die Aufgabe zugrunde, einen Kabel-/Leitungseinführung der eingangsgenannten Art dahingehend zu verbessern, dass diese eine entsprechende Schutzart realisiert und eine sichere und feste Verbindung der entsprechenden Einzelelemente, insbesondere im Hinblick auf die Schutzart ermöglicht.

Diese Aufgabe wird durch die Merkmale des Patentanspruchs 1 gelöst. Weitere Ausgestaltungen der Erfindung ergeben sich aus den Unteransprüchen.

Erfindungsgemäß ist die Kabel-/Leitungseinführung in explosionsgefährdenden Bereichen einsetzbar und die Führungs- und/oder Positioniermittel sind an gegenüberliegenden Trennkanten der Einzelelemente als miteinander verrastende Führungs- und/oder Positioniermittel ausgebildet.

Das heißt, erfindungsgemäß erfüllt die Kabel-/Leitungseinführung entsprechende Erfordernisse der gewünschten Schutzart, wie beispielsweise IPx5 oder IPx6 oder auch andere IP- Schutzarten und ein Verbinden der Einzelelemente erfolgt bereits durch die entsprechenden Führungs- und/oder Positioniermittel und nicht erst durch das Aufsetzen des Klemmteils oder der Kontermutter. Dadurch kann die Kabel-/Leitungseinführung bereits im zusammengesetzten Zustand von Einführhülse und Klemmteil noch entlang des Kabels oder entlang der Leitung verschoben werden und wird dann an entsprechender Einbauposition durch Klemmteil und Kontermutter fixiert und gegenüber Kabel, Leitung und Gehäusewand abgedichtet.

Um eine verbesserte Abdichtung gegenüber Kabel bzw. Leitung zu ermöglichen, kann die Kabel-/Leitungseinführung weiterhin wenigstens einen insbesondere radial verformbaren Dichtungsring und/oder Druckring aufweisen. Dichtungsring und Druckring können zwischen Klemmteil und Einführhülse angeordnet werden. Der Dichtungsring kann einen im Durchmesser vergrößerten Abschnitt aufweisen, der beispielsweise an einer entsprechenden Stufe innerhalb der Einführhülse anliegt, um so die Position des Dichtrings in Axialrichtung zu bestimmen. Dies kann analog auch für den Druckring gelten, wobei beide Ringe auch ohne eine solche Durchmesservergrößerung ausgebildet sein können und beispielsweise in entsprechenden Vertiefungen auf einer Innenseite von Klemmteil oder Einführhülse positioniert werden können. Der Druckring kann auf den Dichtungsring aufschiebbar sein. Je nach Durchmesser der Leitungen/Kabel können noch weitere und/oder dickwandigere Druckringe verwendet werden.

Um außer über den Dichtungsring bzw. Druckring eine Abdichtung gegenüber Kabel oder Leitung zu ermöglichen, kann der Verbindungsabschnitt der Einführhülse an seinem zum Klemmteil weisend freien Ende insbesondere irisförmig angeordnete Klemmlamellen aufweisen. Diese werden bei Aufschrauben des Klemmteils in Richtung Kabel bzw. Leitung radial nach innen gebogen. Dabei kann der Dichtungs- und/oder Druckring zwischen den Klemmlamellen und dem Kabel bzw. der Leitung angeordnet sein.

Um gegenüber der Gehäusewand eine verbesserte Abdichtung zu ermöglichen, kann die Kabel-/Leitungseinführung einen auf einen Endeinsteckabschnitt der Einführhülse aufsetzbaren Flachdichtring aufweisen. Dieser wird bei Fixieren der Einführhülse relativ zur Gehäusewand, siehe beispielsweise die Kontermutter, gegen einen entsprechenden Öffnungsrand der Gehäusewand abdichtend angedrückt.

Eine einfache Möglichkeit zur Ausbildung des Klemmteils kann darin gesehen werden, wenn dieses Klemmteil als Überwurfmutter mit insbesondere Andrückkragen ausgebildet ist. Wird die Überwurfmutter auf den Verbindungsabschnitt der Einführhülse aufgeschraubt, erfolgt insbesondere durch den Andrückkragen eine Verformung von Dichtring und/oder Druckring und insbesondere der Klemmlamellen. Durch diese Verformung erfolgt eine Abdichtung der Kabel-/Leitungseinführung gegenüber dem Kabel bzw. der Leitung und die übrige Abdichtung gegenüber der Gehäusewand erfolgt insbesondere durch den Flachdichtring.

Auch im Zusammenhang mit den entsprechenden Dichtmitteln ist in der Regel sichergestellt, dass diese ohne Unterbrechung der elektrischen Versorgung der elektrischen/elektronischen Vorrichtung auf Kabel oder Leitung aufsetzbar sind. Dazu können Dichtungsring, Druckring und/oder Flachdichtring aus jeweils zumindest zwei offenen Dichtungsringhälften zusammensetzbar sein. Auch diese sind direkt auf Kabel bzw. Leitung aufsetzbar und dort mittels weiterem Aufsetzen von Einzelelementen der Einführhülse und/oder Klemmteil fixierbar und abdichtend an Kabel/Leitung bzw. Gehäusewand andrückbar.

Es ist ebenfalls denkbar, dass nicht nur zwei Einzelelemente für Einführhülse und Klemmteil bzw. zwei Dichtungsringhälften für die entsprechenden Dichtungsringe verwendet werden. Es ist ebenfalls möglich, dass beispielsweise drei, vier oder auch mehr Teile verwendet werden, die allerdings den Aufwand beim Anbringen und Zusammensetzen der entsprechenden Teile erhöhen.

Ebenso gibt es verschiedene Möglichkeiten zur Anordnung der Teilung der Einzelelemente bzw. der entsprechenden Trennkanten. Eine Möglichkeit ist, dass die Teilung bzw. die Trennkanten der Einzelteile bzw. der Dichtungsringhälften im Wesentlichen linear in Axialrichtung der Kabel-/Leitungseinführung verlaufen. Das heißt, die Einzelelemente für Einführhülse und Klemmteil bestehen beispielsweise aus zwei Halbschalen, die über die entsprechenden Führungs- und/oder Positioniermittel zueinander ausrichtbar und miteinander durch Rasteingriff befestigbar sind. Insbesondere bei den Dichtungsringhälften können andere Verbindungsmittel vorgesehen sein, da die Dichtungsringe im Inneren der Kabel-/Leitungseinführung angeordnet sind, und beispielsweise keine entsprechenden Rastmittel aufweisen müssen, die insbesondere im Hinblick auf die zu realisierende Schutzart miteinander in entsprechendem Eingriff stehen sollen.

Weiterhin ist denkbar, dass die Teilung bzw. die Trennkante der Teile in anderer Weise verläuft, wie beispielsweise spiralförmig, abgestuft, wellenförmig oder dergleichen in im Wesentlichen Axialrichtung.

Eine einfache Ausbildung der Führungs- und/oder Positioniermittel zum Verrasten kann darin gesehen werden, wenn diese als Rasthaken und/oder Raststifte, und/oder Rastzungen oder dergleichen mit den entsprechenden Gegenelementen in Form von Einrast- und/oder Einstecköffnung ausgebildet sind. Es besteht ebenfalls die Möglichkeit, die Rastzungen bei bereits verwendeten Rasthaken und/oder Raststiften auch nur als Einsteckzungen mit entsprechenden Einstecköffnungen auszubilden.

Es ist weiterhin denkbar, dass die entsprechenden Führungs- und/oder Positioniermittel von Außenseiten der Einzelelemente bzw. Einführhülse und Klemmteil abstehen und nach Zusammensetzen der Einzelelemente miteinander in Eingriff sind. Eine einfachere Ausführung ergibt sich allerdings beispielsweise dadurch, dass Rasthaken und Raststifte entlang einer Trennkante und entsprechende Einrastöffnung entlang einer gegenüberliegenden Trennkante der Einzelelemente angeordnet sind. Dadurch sind die entsprechenden Führungs- und/oder Positioniermittel nach Ausrichten und Zusammensetzen der Einzelelemente von außen nicht sichtbar.

Dies gilt analog auch für Einsteckzungen und Einstecköffnungen, wobei Einsteckzungen und entsprechende Einstecköffnungen an gegenüberliegenden Trennkanten der Einzelelemente angeordnet sein können.

Um ein Einrasten in den Einrastöffnungen, insbesondere bei Rasthaken und Raststiften in einfacher Weise zu ermöglichen, kann die entsprechende Einrastöffnung mit Hinterschnitt ausgebildet sein.

Als weiterer Vorteil kann angesehen werden, wenn zumindest die den Rasthaken zugeordnete Einrastöffnung eine insbesondere radial nach außen offene Eingriffsöffnung zum Lösen des Rasteingriffs des Rasthakens durch Eingriff eines Lösewerkzeugs aufweist. Das heißt, dass nicht ohne ein entsprechendes Lösewerkzeug ein Auseinandernehmen der Einzelelemente möglich ist. Dies erhöht die Sicherheit der Kabel-/Leitungseinführung und ein solches Lösewerkzeug wird beispielsweise nur durch entsprechendes Fachpersonal mitgeführt und benutzt. Dies gilt analog auch für die Einrastöffnung des Raststiftes, die ebenfalls mit einer für ein entsprechendes Lösewerkzeug zugänglichen Eingriffsöffnung ausgebildet sein kann.

Im Hinblick auf die Führungs- und/oder Positioniermittel sei noch angemerkt, dass diese beispielsweise durch Einspritzguss, Extrusion oder dergleichen herstellbar sind. Dadurch ist die Herstellung zusammen mit den weiteren Teilen der Kabel-/Leitungseinführung vereinfacht und gleichzeitig mit ausreichender mechanischer Festigkeit möglich.

Es wurde bereits darauf hingewiesen, dass eine entsprechende Abdichtung der Kabel-/Leitungseinführung gegenüber Kabel/Leitung oder Gehäusewand durch die Dichtungsringe erfolgt. Um die Abdichtung, insbesondere entlang der Trennkanten der Einzelelemente von Einführhülse und Klemmteil, oder zumindest der Einführhülse weiterhin zu verbessern, ist eine im Wesentlichen in Axialrichtung entlang der Trennkanten angeordnete Abdichtung, in Form einer Nut-Feder-Verbindung ausgebildet.

Diese stellt eine ausreichende Abdichtung entlang der Trennkanten sicher, wobei auch ein abgestufter oder anders verlaufender Verlauf der entsprechenden Nut-Feder-Verbindung im Bereich der Trennkanten möglich ist.

Dazu erweist es sich weiterhin in der Regel als günstig, wenn jedes Einzelelement zumindest der Einführhülse entlang einer Trennkante eine Nut und entlang der anderen Trennkante des anderen Einzelelements eine Feder aufweist. Diese greifen bei Zusammensetzen der Einzelelemente ineinander und vervollständigen die Abdichtung der Kabel-/Leitungseinführung insbesondere auch im Hinblick auf die erwünschte Schutzart.

Bei solchen Abdichtungen kann die erfindungsgemäße Kabel-/Leitungseinführung auch Erfordernisse einer erhöhten Sicherheit des Explosionsschutzes erfüllen, siehe beispielsweise Ex-e oder Ex-i.

Um die Abdichtung in diesem Zusammenhang zu verbessern, kann insbesondere in der Nut ein Dichtelement angeordnet sein.

In der Regel kann es als ausreichend erachtet werden, wenn jeweils ein Rasthaken, ein Raststift, eine Rastzunge oder eine Einsteckzunge entlang einer entsprechenden Trennkante angeordnet ist. Allerdings können diese auch in größerer Anzahl, beispielsweise paarweise oder auch zu dritt oder viert entlang einer Trennkante angeordnet sein. Insbesondere in Zusammenhang mit den Einsteckzungen kann es sich weiterhin als vorteilhaft erweisen, wenn zumindest die Einsteckzungen und entsprechende Einstecköffnungen paarweise entlang einer Trennkante angeordnet sind, um eine entsprechende Zentrierung der Einzelelemente zur Positionierung zu vereinfachen. Dabei besteht allerdings ebenfalls die Möglichkeit, dass die entsprechenden Einsteckzungen bzw. Einstecköffnungen unterschiedliche Breiten aufweisen, um beispielsweise eine Zuordnung der verschiedenen Einzelelemente zueinander zu verbessern. Ebenfalls ist zumindest im Zusammenhang mit den Einsteckzungen und Einstecköffnungen denkbar, dass diese mit unterschiedlicher Breite ausgebildet sind, so dass allein durch Einsteckzungen und Einstecköffnung ein gewisses Spiel in Axialrichtung beim Zusammensetzen der Einzelelemente möglich ist, dass allerdings dann bei Eingriff der weiteren Rastelemente zu einer genauen Relativpositionierung der entsprechenden Einzelelemente führt.

Es ist weiterhin denkbar, dass beispielsweise die verschiedenen Bestandteile der Führungs- und/oder Positioniermittel mit unterschiedlichen Längen von den entsprechenden Trennkanten vorstehen und ebenfalls die entsprechenden Öffnungen unterschiedliche und passende Tiefen aufweisen. Dadurch besteht beispielsweise die Möglichkeit, zuerst eine Zuordnung der Einzelelemente über einen Eingriff der Einsteckzungen in entsprechende Einstecköffnungen zu erreichen, noch bevor die weiteren Rastelemente mit entsprechenden Rastöffnungen in Eingriff geraten. Das heißt, über Einsteckzungen und Einstecköffnung erfolgt beispielsweise eine erste Positionierung und Zentrierung der Einzelelemente, die dann bei weiterem Eingriff der Rastelemente mit Rastöffnungen zu einer genaueren Zentrierung und Positionierung führt.

Wie bereits ausgeführt, sind auch die Dichtungen durch entsprechende Dichtungsringhälften gebildet. Dadurch besteht einerseits die Möglichkeit, dass diese Dichtungsringhälften in entsprechende Aufnahmen von den übrigen Teilen der Kabel-/Leitungseinführung eingelegt werden. Es kann allerdings als günstig erachtet werden, wenn auch die Dichtungsringhälften lösbar miteinander verbunden sind.

Zu einer solchen Verbindung sind unterschiedliche Möglichkeiten denkbar. Ein Beispiel kann darin gesehen werden, dass die Dichtungsringhälften an einander zuweisenden Trennkanten jeweils zumindest eine Einschubnut und einen Einschubvorsprung aufweisen. Beim Zusammensetzen der Dichtungsringhälften sind diese zuerst in Axialrichtung etwas versetzt zueinander angeordnet, so dass der Einschubvorsprung der einen Trennkante in die Einschubnut an der anderen Trennkante in axialer Richtung eingeschoben werden kann. Nach vollständigem Einschieben des Einschubvorsprungs in die Einschubnut sind dann die Dichtungsringhälften sowohl miteinander verbunden, als auch korrekt zueinander ausgerichtet.

Eine Möglichkeit der Ausbildung von Einschubnut und Einschubvorsprung kann darin gesehen werden, wenn diese als Schwalbenschwanzverbindung ausgebildet sind.

Eine weitere Möglichkeit insbesondere bei den Dichtungsringhälften der Flachdichtung zu deren Verbindung kann darin gesehen werden, wenn diese an einander zuweisenden Enden jeweils eine Eindrückvertiefung und/oder einen Eindrückvorsprung aufweisen. Das heißt, die beiden Dichtungsringhälfen des Flachdichtrings werden durch Eindrücken des Eindrückvorsprungs in die Eindrückvertiefung miteinander verbunden und zueinander ausgerichtet.

Wie bereits ausgeführt, ist eine solche Dichtungsanordnung gegebenenfalls auch in anderer Form, die zumindest entlang der Trennkanten der Einzelelemente der Einführhülse ausgebildet ist, günstig, damit entlang dieser Trennkanten eine ausreichende Abdichtung vorgesehen werden kann, im Hinblick auf Schutzart und gegebenenfalls Explosionsschutz.

Im Folgenden werden vorteilhafte Ausführungsbeispiele der Erfindung anhand der der Zeichnung beigefügten Figuren hier erläutert.

Es zeigen:
- Figur 1: eine perspektivische Darstellung einer zusammengesetzten Kabel-/Leitungseinführung;
- Figur 2: eine auseinandergezogene Darstellung der Kabel-/Leitungseinführung nach Figur 1;
- Figur 3: eine perspektivische Ansicht eines ersten Einzelelements einer Einführhülse;
- Figur 4: eine perspektivische Ansicht eines zweiten Einzelelements der Einführhülse;
- Figur 5: eine perspektivische Ansicht von schräg hinten auf zwei Einzelelemente eines Klemmteils;
- Figur 6: eine weitere perspektivische Ansicht der Einzelelemente des Klemmteils nach Figur 5;
- Figur 7: eine perspektivische Ansicht von schräg hinten auf Dichtungsringhälften eines Dichtungsringes;
- Figur 8: eine perspektivische Ansicht auf Dichtungsringhälften eines Druckrings, und
- Figur 9: eine perspektivische Ansicht auf Dichtungsringhälften eines Flachdichtringes.

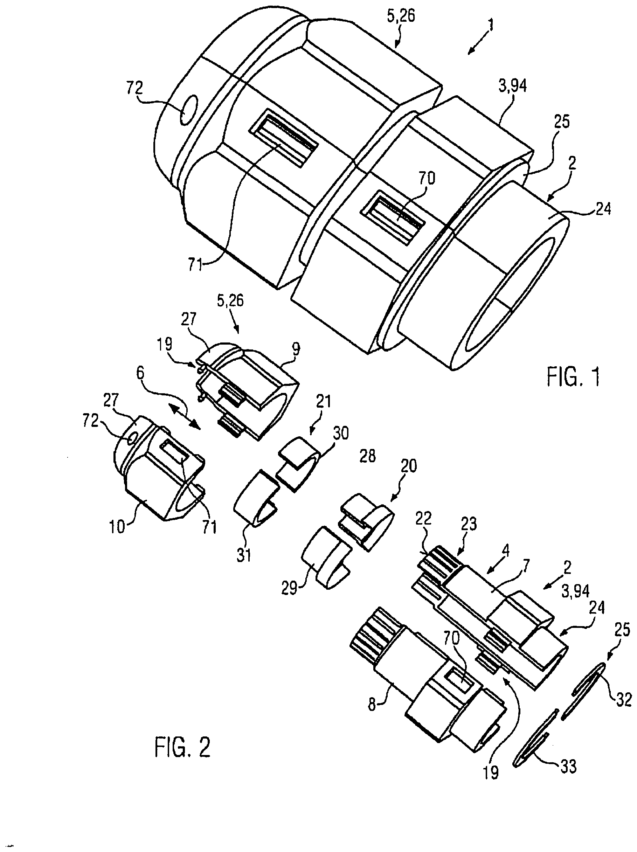

Figur 1 betrifft eine perspektivische Ansicht auf eine zusammengesetzte Kabel-/Leitungseinführung 1 gemäß Erfindung. Diese umfasst eine Einführhülse bzw. einen Zwischenstutzen 2, im Folgenden jeweils Einführhülse genannt, und ein Klemmteil 5 in Form einer Überwurfmutter 26. Die Überwurfmutter 26 ist auf einen Verbindungsabschnitt 4 der Einführhülse 2, siehe auch Figur 2, aufgeschraubt. Die Einführhülse 2 weist weiterhin einen Polygonkranz 94 zum Angriff eines Schraubschlüssels auf, der gleichzeitig mit seinen radial vorstehenden Endflächen einen Anlageflansch 3 bildet. An einem dieser Anlageflansche 3 liegt ein einem Endeinsteckabschnitt 24 aufgeschobener Flachdichtring 25 an. Dieser liegt bei eingebauter Kabel-/Leitungseinführung 1 an einem Rand einer Öffnung in einer Gehäusewand an. Die Kabel-/Leitungseinführung 1 dient hierbei zur Durchführung eines Kabels oder einer Leitung durch die entsprechende Wandöffnung in das Innere des Gehäuses. Auf den Endeinsteckabschnitt 24 wird in diesem Zusammenhang weiterhin eine Kontermutter aufgeschraubt. Ein entsprechendes Gewinde auf einer Außenseite des Endeinsteckabschnitts 24 ist zur Vereinfachung in Figur 1 nicht dargestellt.

Sowohl Klemmteil 5 als auch Einführhülse 2 weisen radial nach außen offene Eingriffsöffnungen 70 bzw. 71 auf. Diese dienen zu einem Werkzeugeingriff für ein Lösewerkzeug, mittels dem ein Rasteingriff von entsprechenden Führungs- und/oder Positioniermitteln 19, siehe die folgenden Figuren, lösbar ist. Eine weitere Eingriffsöffnung 72 ist im vorderen Bereich des Klemmteils 5 angeordnet und dient analog zum Lösen eines entsprechenden Rasteingrifft, siehe die folgende Figuren.

Figur 2 zeigt eine auseinandergezogene Darstellung der Kabel-/Leitungseinführung 1 nach Figur 1. In dieser Figur ist insbesondere erkennbar, dass alle Teile der Kabel-/Leitungseinführung 1 zweiteilig aus entsprechenden Einzelelementen 7, 8; 9, 10 sowie Dichtungsringhälften 28 bis 33 aufgebaut sind.

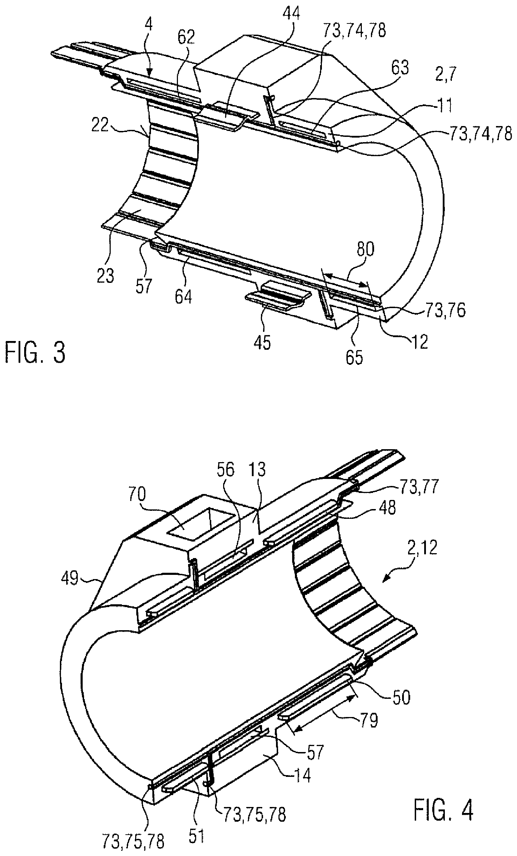

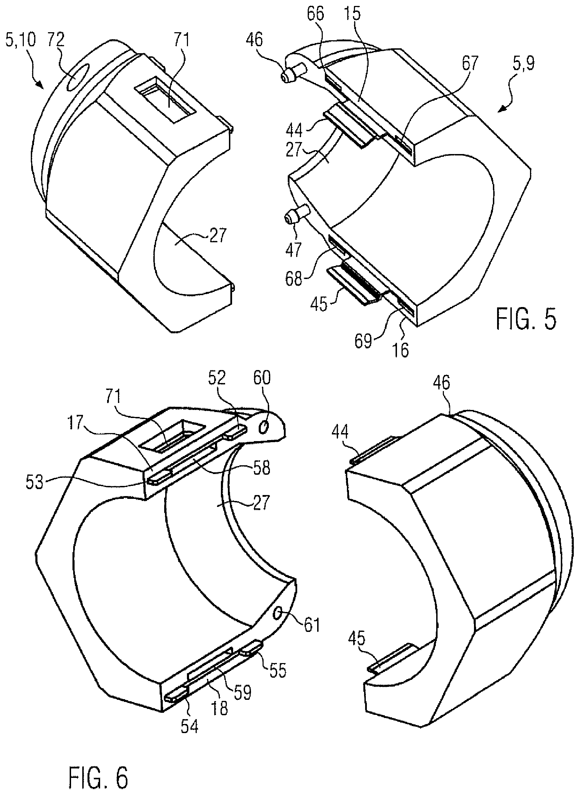

Das Klemmteil 5 als Überwurfmutter 26 weist zwei Einzelelemente 9 und 10 auf. Diese sind entlang entsprechender Trennkanten 15, 16 sowie 17, 18 miteinander verbindbar, siehe auch Figuren 5 und 6. Dies gilt analog für die Einzelelemente 7 und 8 der Einführhülse 2 mit Trennkanten 11, 12, 13 und 14, siehe auch Figuren 3 und 4.

Entlang dieser Trennkanten von Klemmteil und Einführhülse sind Führungs- und/oder Positioniermittel 19 in Form von Rasthaken 44, 45, Raststiften oder -zapfen 46, 47 sowie Einsteckzungen 48 bis 55 angeordnet. Diese sind in entsprechende Einrastöffnungen 56 bis 61 oder Einstecköffnungen 62 bis 69 einsteckbar.

Die Einzelelemente 7, 8 der Einführhülse 2 weisen beim Einzelelement 7 entlang beider Trennkanten 11, 12 zumindest einen Rasthaken 44, 45 auf, siehe auch Figuren 3 und 4. Diese Rasthaken stehen von den Trennkanten 11, 12 vor und weisen in Richtung entsprechender Einrastöffnungen 56, 57, die an den entsprechenden Trennkanten 13, 14 des Einzelelements 8 ausgebildet sind. Im Bereich der Einrastöffnungen 56, 57 sind weiterhin die Eingriffsöffnungen 70 vorgesehen, mittels derer der Rasteingriff von Rasthaken 44 bzw. 45 mit entsprechender Einrastöffnung 56 bzw. 57 lösbar ist. Zum Eingriff in die Eingriffsöffnungen 70 wird das entsprechende Eingriffswerkzeug benötigt.

Entlang der Trennkanten 11 und 12 des Einzelelements 7 bzw. der Trennkanten 13 und 14 des Einzelelements 8 sind weitere Teile der Führungs- und/oder Positioniermittel 19 angeordnet. Zu diesen Teilen gehören beispielsweise die Rastzungen oder Einsteckzungen 48 bis 51. Diese sind entlang der oberen Trennkante 13 bzw. entlang der unteren Trennkante 14 angeordnet. Die Rastzungen 49 und 51 weisen die gleiche Breite 80 auf, siehe auch Figur 3, wobei die Rastzungen 48 und 50 eine größere Breite 79 aufweisen. Die Einstecköffnungen 62, 63, 64 und 65 sind in den Trennkanten 11 und 12 des Einzelelements 7 angeordnet, siehe Figur 3 und weisen entsprechende Breiten 79 bzw. 80 auf.

Die Rasthaken 44, 45 sind im Bereich des Polygonkranzes 94 angeordnet.

In den Figuren 2 bis 4 ist weiterhin erkennbar, dass am entsprechenden Ende 22 des Verbindungsabschnitts 4 eine Vielzahl irisförmiger Klemmlamellen 23 angeordnet ist. Diese werden bei Aufschrauben des Klemmteils 5 insbesondere durch einen Andrückkragen 27 radial nach innen verstellt. Dadurch drücken sie sowohl gegen Dichtungsring 20 bzw. Druckring 21 als auch über diesen gegen Kabel bzw. Leitung.

Zwischen Klemmlamellen 23 und Anlageflansch 3 ist in der Regel ein Gewinde zum Aufschrauben der Überwurfmutter 26 als Klemmteil 5 vorgesehen, das in den Figuren zur Vereinfachung nicht dargestellt ist.

Die Überwurfmutter 26 ist aus den entsprechenden Einzelelementen 9 und 10 aufgebaut, die analog zu den Einzelelementen 7 und 8 der Einführhülse 2 (auch Zwischenstutzen genannt) Führungs- und/oder Positioniermittel 19 aufweisen. Diese sind in den Figuren 5 und 6 dargestellt.

Die entsprechenden Führungs- und/oder Positioniermittel 19 umfassen ebenfalls Rasthaken 44 und 45, siehe beispielsweise Figur 2 oder 5 sowie im jeweils anderen Einzelelement angeordnete Einrastöffnungen 58, 59. Auch hier ist jede Einrastöffnung über eine radial nach außen offene Eingriffsöffnung 71 mittels einen entsprechenden Eingriffswerkzeug zugänglich, um den Rasteingriff von Rasthaken und Einrastöffnungen zu lösen. Die entsprechenden Einrastöffnungen weisen in der Regel einen Hinterschnitt auf, mit dem die Rasthaken oder Raststifte verrasten. Entsprechende Raststifte 46, 47 stehen von den Trennkanten 15, 16 des Einzelelements 5 vor, siehe insbesondere Figur 5. Den Rasthaken 46, 47 entsprechende Einrastöffnungen 60, 61 sin in den Trennkanten 17, 18 des Einzelelements 10 angeordnet. Auch diesen Einrastöffnungen ist eine Eingriffsöffnung 72 zugeordnet, siehe insbesondere Figuren 2 und 5. Weiterhin weisen die Trennkanten 17, 18 Rast- oder Einsteckzungen 53, 54, 52 und 55 auf, die paarweise seitlich neben den Einrastöffnungen 58, 59 angeordnet sind. In diesem Fall sind die Zungen 52 bis 55 gleich breit, wie auch die zugehörigen Einstecköffnungen 66, 67, 68 und 69 in den Trennkanten 15 und 16 des Einzelelements 9.

Die Rasthaken dienen zum selbsttätigen Verrasten und miteinander Verbinden der entsprechenden Einzelelemente, wie auch die Raststifte bzw. -zapfen. Außerdem dienen zumindest die Raststifte/-zapfen außerdem auch zum Zentrieren, ebenso wie die entsprechenden Einstecköffnungen und Einsteckzungen an den jeweiligen Trennkanten.

Es besteht die Möglichkeit, die Anzahl der entsprechenden Rasthaken, Raststifte/-zapfen oder Einsteckzungen zu variieren, so dass auch weniger oder mehr dieser Elemente als Führungs- und/oder Positioniermittel verwendbar sind. Es ist ebenfalls denkbar, dass beispielsweise die Rasthaken bei den Einzelelementen 7, 8 der Einführhülse 2 durch entsprechende Raststifte/- Zapfen ergänzt werden, siehe zum Vergleich die Einzelelemente 9 und 10 des Klemmteils 5. Weiterhin besteht ebenfalls die Möglichkeit, dass die entsprechenden Einsteckzungen, siehe Figuren 5 und 6, unterschiedliche Breiten und/oder Längen aufweisen, siehe hierzu im Vergleich die Figuren 3 und 4.

Zumindest im Bereich der Trennkanten 11, 12 sowie 13, 14 der beiden Einzelelemente 7 und 8 der Einführhülse 2 ist eine Dichtstruktur angeordnet. Diese ergänzt die Abdichtung durch die Dichtungsringe 20, 21 und 25 mittels der Kabel-/Leitungseinführung. Die Dichtstruktur ist beim dargestellten Ausführungsbeispiel durch eine Nut-Feder-Verbindung 73 aus Nuten 74, 75 und Federn 76, 77 gebildet. Außerdem ist in der jeweiligen Nut 74 bzw. 75 ein fadenförmiges Dichtelement 78 eingelegt. Dies ist insbesondere in Figuren 3 und 4 sichtbar. Die Nuten bzw. Federn erstrecken sich im Wesentlichen in Axialrichtung 6 der Kabel-/Leitungseinführung 1. Allerdings treten einige Abweichungen im axialen Verlauf auf, siehe beispielsweise im Bereich des Polygonkranzes 94 bzw. an Enden von Nuten und Federn, die den Klemmlamellen 23 zugeordnet sind.

Bei dem dargestellten Ausführungsbeispiel ist die entsprechende Nut 74 bzw. 75 jeweils in den Trennkanten 11 bzw. 14 angeordnet und in diesen Nuten ist das Dichtelement 78 angeordnet. In den weiteren Trennkanten 12 bzw. 13 ist die Feder 76 bzw. 77 ausgebildet. Die entsprechenden Führungs- und/oder Positioniermittel 19 sind radial weiter außen relativ zu Nut und Feder mit Dichtelement angeordnet.

Entsprechende Nuten und Federn sind auch in den Einzelelementen 9, 10 des Klemmteils 5 anordbar. Allerdings ist eine solche Anordnung in der Regel nicht notwendig, da zwischen Klemmteil 5 und Einführhülse 2 eine entsprechende Abdichtung relativ zum Kabel oder zur Leitung durch die Dichtringe 21 bzw. 20 erfolgt.

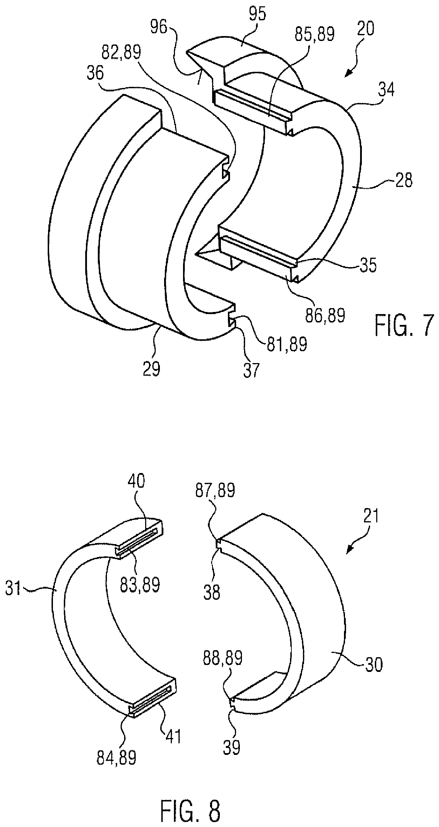

In der Figur 7 ist der der Dichtungsring 20 vergrößert und perspektivisch dargestellt. Insbesondere ist erkennbar, dass dieser auf einer Seite eine Durchmesservergrößerung 95 aufweist, die auf ihrer Innenseite eine Einlaufschräge 96 aufweist. Diese weist in Richtung Klemmlamellen 23, siehe auch Figur 2, eine nach radial außen verlaufende Schräge auf. Die Einlaufschräge 96 greift in eine entsprechende Einlaufnut 97 am Ende der Klemmlamellen 23 ein.

Zur Verbindung entsprechender Dichtungsringhälften 28, 29 des Dichtungsrings 20 sind entlang von Trennkanten 34, 35 bzw. 36, 37 Verbindungsmittel angeordnet. Diese sind in dem dargestellten Ausführungsbeispiel als Einschubnuten 81 bzw. 82 in der Dichtungsringhälfte 29 bzw. als Einschubvorsprünge 85 bzw. 86 in der Dichtungsringhälfte 28 ausgebildet. Die entsprechenden Einschubnuten sind zumindest an einem Ende in axialer Richtung offen, so dass von diesem Ende her die Einschubvorsprünge in die Einschubnuten einschiebbar sind, wobei sich insgesamt eine schwalbenschwanzähnliche Verbindung 89 ergibt. Die entsprechenden Nuten und Vorsprünge sind entlang von Trennkanten 34, 35 bzw. 36, 37 der Dichtungsringhälften 28 und 29 ausgebildet.

Analog erfolgt die Verbindung von Dichtungsringhälften 30, 31 des Druckringes 21, siehe Figuren 2 und 8. Auch diese Dichtungsringhälften weisen entsprechende Trennkanten 38, 39 bzw. 40, 41 auf. In diesen Trennkanten sind Einschubnuten 83, 84 bzw. Einschubvorsprünge 87 und 88 angeordnet. Auch diese sind von einem offenen Ende der Einschubnut 83 bzw. 84 einschiebbar und bilden eine schwalbenschwanzähnliche Verbindung 89.

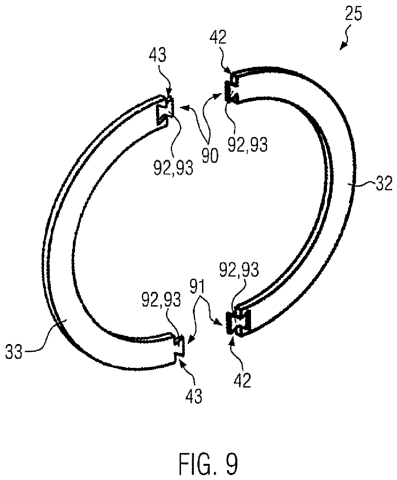

In Figur 9 ist eine entsprechend vergrößerte Ansicht des Flachdichtringes 25 dargestellt, der aus Dichtungsringhälften 32 und 33 gebildet ist. Auch diese weisen entsprechende Verbindungsmittel an Trennkanten 42 bzw. 43 auf. In diesem Fall sind die Verbindungsmittel an Enden 90 bzw. 91 der Dichtungsringhälften 32, 33 angeordnet und zwar in Form jeweils einer Eindrückvertiefung 92 bzw. eines Eindrückvorsprungs 93. Dabei ist zu beachten, dass im Wesentlichen der Eindrückvorsprung 93 vom jeweiligen Ende 90 bzw. 91 vorsteht, während auf der anderen Seite der Dichtungsringhälften ebenfalls entsprechende Eindrückvertiefungen 92 ausgebildet sind. Dies ist insbesondere bei den Eindrückvorsprüngen bzw. Eindrückvertiefungen 92 erkennbar, so dass an jedem Ende 90 bwz. 91 eine Kombination aus Eindrückvorsprung und Eindrückvertiefung angeordnet ist.

Erfindungsgemäß ergibt sich somit die Möglichkeit, eine Kabel-/Leitungseinführung für den Einsatz in explosionsgefährdeten Bereichen bereitzustellen, die eine entsprechende Schutzart realisiert und auch Explosionsschutzbedingungen wie Ex-i oder Ex-e. Dies gilt insbesondere auch durch die Abdichtungsmöglichkeiten bei der erfindungsgemäßen Kabel-/Leitungseinführung sowie auch das Lösen der entsprechenden Einzelelemente nur durch Verwendung eines entsprechenden Werkzeugs.

## Patentansprüche

1. Eine Kabel-/Leitungseinführung (1), die Folgendes aufweist:
eine Einführhülse (2), die einen Verbindungsabschnitt (4) und einen Anlageflansch (3) beinhaltet, wobei der Anlageflansch (3) angrenzend zum Verbindungsabschnitt (4) radial nach außen absteht; und
ein Klemmteil (5), wobei das Klemmteil (5) auf der Einführhülse (2) in Richtung des Anlageflansches (3) lösbar aufsetzbar ist;
wobei sowohl die Einführhülse (2) als auch das Klemmteil (5) aus wenigstens zwei, in Axialrichtung (6) geteilten Einzelelementen (7, 8; 9, 10) zusammensetzbar sind;
wobei die wenigstens zwei geteilten Einzelelemente (7, 8; 9, 10) von sowohl der Einführhülse (2) als auch dem Klemmteil (5) Mittel (19) zum Führen und/oder Positionieren beinhalten, die entlang entsprechender Trennkanten (11, 12, 13, 14; 15, 16, 17, 18) der wenigstens zwei Einzelelemente (7, 8; 9, 10) angeordnet sind, um die wenigstens zwei Einzelelemente (7, 8; 9, 10) zueinander zu positionieren, wenn die wenigstens zwei Einzelelemente (7, 8; 9, 10) zusammengesetzt werden;
wobei die Mittel (19) zum Führen und/oder Positionieren als miteinander verrastende Mittel (19) ausgebildet sind; und
wobei die Kabel-/Leitungseinführung (1) in explosionsgefährdeten Bereichen verwendbar ist;
**dadurch gekennzeichnet, dass** die wenigstens zwei Einzelelemente (7, 8) der Einführhülse (2) eine abdichtende Nut-Feder-Verbindung (73) beinhalten, die sich in die Axialrichtung entlang den entsprechenden Trennkanten (11, 12, 13, 14) erstreckt, um eine Dichtung zwischen den wenigstens zwei Einzelelementen (7, 8) der Einführhülse (2) zu bilden, wenn die wenigstens zwei Einzelelemente (7, 8) der Einführhülse (2) zusammengesetzt werden.

2. Kabel-/Leitungseinführung nach Anspruch 1, wobei die Kabel-/Leitungseinführung (1) ferner weiterhin wenigstens einen radial verformbaren Dichtungsring (20) und/oder einen radial verformbaren Druckring (21) aufweist.

3. Kabel-/Leitungseinführung nach Anspruch 1 oder 2,
wobei der Verbindungsabschnitt (4) an seinem zum Klemmteil (5) weisenden freien Ende (22) Klemmlamellen (23),insbesondere irisförmig angeordnete Klemmlamellen (23) aufweist,
und/oder wobei die Kabel-/Leitungseinführung (1) einen auf einen Endeinsteckabschnitt (24) der Einführhülse (2) aufsetzbaren Flachdichtring (25) aufweist.

4. Kabel/-Leitungseinführung nach Anspruch 2,
wobei das Klemmteil (5) eine Überwurfmutter (26) mit einem Andrücckragen (27) aufweist,
und/oder wobei wenigstens eines der Folgenden, der Dichtungsring (20), der Druckring (21) und der Flachdichtring (25), aus jeweils wenigstens zwei offenen Ringhälften (28, 29; 30, 31; 32, 33) zusammensetzbar sind.

5. Kabel-/Leitungseinführung nach Anspruch 4,
wobei
die Trennkanten (11, 12, 13, 14; 15, 16, 17, 18) der wenigstens zwei Einzelelemente (7, 8; 9, 10) und Trennkanten (34, 35, 36, 37; 38, 39, 40, 41; 42, 43) der Ringhälften (28, 29; 30, 31; 32, 33) linear in die Axialrichtung (6) verlaufen, oder spiralförmig, abgestuft, oder wellenförmig in die Axialrichtung (6) verlaufen.

6. Kabel-/Leitungseinführung nach einem der vorangehenden Ansprüche, wobei die Mittel (19) zum Führen und/oder Positionieren Rasthaken (44, 45) und/oder Raststifte (46, 47) und/oder Rast- und/oder Einsteckzungen (48, 49, 50, 51; 52, 53, 54, 55) mit entsprechenden Gegenelementen in Form von Einrast- und/oder Einstecköffnungen (56, 57; 58, 59; 60, 61) aufweisen.

7. Kabel-/Leitungseinführung nach Anspruch 6, wobei die Mittel (19) zum Führen und/oder Positionieren Rasthaken (44, 45) und Raststifte (46, 47) entlang ersten Trennkanten (11, 12; 15, 16) von Einzelelementen (7; 9) der wenigstens zwei Einzelelemente (7, 8; 9, 10) und entsprechende Einrastöffnungen (56, 57; 58, 59; 60, 61) entlang zweiten gegenüberliegenden Trennkanten (13, 14; 17, 18) von Einzelelementen (8; 10) der wenigstens zwei Einzelelemente (7, 8; 9, 10) aufweisen.

8. Kabel-/Leitungseinführung nach Anspruch 6 oder 7,
wobei die Mittel (19) zum Führen und/oder Positionieren Einsteckzungen (48, 49, 50, 51; 52, 53, 54, 55) und entsprechende Einstecköffnungen (62, 63, 64, 65; 66, 67, 68, 69) an gegenüberliegenden Trennkanten (11, 12; 13, 14; 15, 16; 17, 18) von Einzelelementen (7, 8; 9, 10) der wenigstens zwei Einzelelemente (7, 8; 9, 10) aufweisen,
und/oder wobei die Einrastöffnungen (56, 57; 58, 59; 60, 61) mit einem Hinterschnitt ausgebildet sind.

9. Kabel-/Leitungseinführung nach Anspruch 7, wobei die den Rasthaken (44, 45) zugeordneten Einrastöffnungen (56, 57; 58, 59) radial nach außen offene Eingriffsöffnungen (70; 71) zum Eingriff eines Lösewerkzeugs zum Lösen des Rasteingriffs der Rasthaken (44, 45) aufweisen.

10. Kabel-/Leitungseinführung nach einem der vorangehenden Ansprüche,
wobei jedes Einzelelement (7, 8) von wenigstens der Einführhülse (2) entlang einer Trennkante (11, 14) eine Nut (74, 75) und entlang der anderen Trennkante (12, 13) eine Feder (76, 77) aufweist,
und wobei insbesondere in der Nut (74, 75) ein Dichtelement (78) angeordnet ist.

11. Kabel-/Leitungseinführung nach Anspruch 6,
wobei die Einsteckzungen (48, 49, 50, 51; 52, 53, 54, 55) und Einstecköffnungen (62, 63, 64, 65; 66, 67, 68, 69) paarweise entlang der Trennkante (11, 12; 13, 14; 15, 16; 17, 18) angeordnet sind,
und/oder wobei die Einsteckzungen (48, 49, 50, 51; 52, 53, 54, 55) der Einzelelemente (7, 8, 9, 10) unterschiedliche Breiten (79, 80) in die Axialrichtung (6) aufweisen.

12. Kabel-/Leitungseinführung nach Anspruch 4,
wobei die Ringhälften (28, 29; 30, 31; 32, 33) lösbar miteinander verbindbar sind,
und wobei insbesondere die Ringhälften (28, 29; 30, 31) an einander gegenüberstehenden Trennkanten (34, 36; 35, 37; 38, 40; 39, 41) jeweils wenigstens eine Einschubnut (81, 82; 83, 84) und einen entsprechenden Einschubvorsprung (85, 86; 87, 88) aufweisen.

13. Kabel-/Leitungseinführung nach Anspruch 12, wobei die Einschubnut (81, 82; 83, 84) und der Einschubvorsprung (85, 86; 87, 88) als Schwalbenschwanzverbindung (89) ausgebildet sind.

14. Kabel-/Leitungseinführung nach Anspruch 13,
wobei wenigstens die Ringhälften (32, 33) des Flachdichtringes (25) an einander gegenüberstehenden Enden (90, 91) jeweils eine Eindrückvertiefung (92) und/oder einen Eindrückvorsprung (93) aufweisen.

## Claims

1. A cable/line gland (1), comprising the following:
an insertion sleeve (2) that comprises a connection segment (4) and an abutment flange (3), wherein the abutment flange (3) projects radially outward adjacent to the connection segment (4); and
a clamping part (5), wherein the clamping part (5) can be detachably placed on the insertion sleeve (2) in the direction of the abutment flange (3);
wherein both the insertion sleeve (2) and the clamping part (5) can be assembled from at least two individual elements (7, 8; 9, 10) divided in the axial direction (6);
wherein the at least two divided individual elements (7, 8; 9, 10) of both the insertion sleeve (2) and the clamping part (5) comprise means (19) for guiding and/or positioning which are arranged along corresponding separation edges (11, 12, 13, 14; 15, 16, 17, 18) of the at least two individual elements (7, 8; 9, 10) in order to position the at least two individual elements (7, 8; 9, 10) relative to each other if the at least two individual elements (7, 8; 9, 10) are assembled;
wherein the means (19) for guiding and/or positioning are formed as means (19) latching together; and
wherein the cable/line gland (1) can be used in potentially explosive areas;
**characterized in that** the at least two individual elements (7, 8) of the insertion sleeve (2) comprise a sealing tongue-and-groove joint (73) extending in the axial direction along the corresponding separation edges (11, 12, 13, 14), in order to form a seal between the at least two individual elements (7, 8) of the insertion sleeve (2) if the at least two individual elements (7, 8) of the insertion sleeve (2) are assembled.

2. Cable/line gland according to Claim 1, wherein the cable/line gland (1) also furthermore comprises at least one radially deformable sealing ring (20) and/or a radially deformable thrust ring (21).

3. Cable/line gland according to Claim 1 or 2,
wherein the connection segment (4) has clamping lamellae (5), in particular clamping lamellae (22) arranged in an iris shape, on its free end (23) that points toward the clamping part (23),
and/or wherein the cable/line gland (1) has a flat sealing ring (25) which can be placed on an end insertion segment (24) of the insertion sleeve (2).

4. Cable/line gland according to Claim 2,
wherein the clamping part (5) has a union nut (26) with a pressure collar (27),
and/or wherein at least one of the following - the sealing ring (20), the thrust ring (21), and the flat sealing ring (25) - can respectively be assembled from at least two open ring halves (28, 29; 30, 31; 32, 33).

5. Cable/line gland according to Claim 4,
wherein the separation edges (11, 12, 13, 14; 15, 16, 17, 18) of the at least two individual elements (7, 8; 9, 10) and separation edges (34, 35, 36, 37; 38, 39, 40, 41; 42, 43) of the ring halves (28, 29; 30, 31; 32, 33) run linearly in the axial direction (6), or run in a spiral, stepped, or undulating configuration in the axial direction (6).

6. Cable/line gland according to any one of the preceding claims, wherein the means (19) for guiding and/or positioning have latching hooks (44, 45), and/or latching pins (46, 47), and/or latching and/or insertion tongues (48, 49, 50, 51; 52, 53, 54, 55), with corresponding counter-elements in the form of snap-in and/or insertion openings (56, 57; 58, 59; 60, 61).

7. Cable/line gland according to Claim 6, wherein the means (19) for guiding and/or positioning have latching hooks (44, 45) and latching pins (46, 47) along first separation edges (11, 12; 15, 16) of individual elements (7; 9) of the at least two individual elements (7, 8; 9, 10), and corresponding snap-in openings (56, 57; 58, 59; 60, 61) along second opposite separation edges (13, 14; 17, 18) of individual elements (8; 10) of the at least two individual elements (7, 8; 9, 10).

8. Cable/line gland according to Claim 6 or 7,
wherein the means (19) for guiding and/or positioning have insertion tongues (48, 49, 50, 51; 52, 53, 54, 55) and corresponding insertion openings (62, 63, 64, 65; 66, 67, 68, 69) at opposite separation edges (11, 12; 13, 14; 15, 16; 17, 18) of individual elements (7, 8; 9, 10) of the at least two individual elements (7, 8; 9, 10),
and/or wherein the snap-in openings (56, 57; 58, 59; 60, 61) are formed with an undercut.

9. Cable/line gland according to Claim 7, wherein the snap-in openings (56, 57; 58, 59) associated with the latching hooks (44, 45) have radially outwardly open engagement openings (70; 71) for the engagement of a release tool for releasing the latching engagement of the latching hooks (44, 45).

10. Cable/line gland according to any one of the preceding claims,
wherein each individual element (7, 8) of at least the insertion sleeve (2) has a groove (74, 75) along a separation edge (11, 14) and a spring (76, 77) along the other separation edge (12, 13),
and wherein in particular a sealing element (78) is arranged in the groove (74, 75).

11. Cable/line gland according to Claim 6,
wherein the insertion tongues (48, 49, 50, 51; 52, 53, 54, 55) and insertion openings (62, 63, 64, 65; 66, 67, 68, 69) are arranged in pairs along the separation edge (11, 12; 13, 14; 15, 16; 17, 18),
and/or wherein the insertion tongues (48, 49, 50, 51; 52, 53, 54, 55) of the individual elements (7, 8, 9, 10) have different widths (79, 80) in the axial direction (6).

12. Cable/line gland according to Claim 4,
wherein the ring halves (28, 29; 30, 31; 32, 33) can be detachably connected to one another,
and wherein in particular the ring halves (28, 29; 30, 31) at mutually opposite separation edges (34, 36; 35, 37; 38, 40; 39, 41) respectively have at least one insertion groove (81, 82; 83, 84) and a corresponding insertion projection (85, 86; 87, 88).

13. Cable/line gland according to Claim 12, wherein the insertion groove (81, 82; 83, 84) and the insertion projection (85, 86; 87, 88) are formed as a dovetail joint (89).

14. Cable/line gland according to Claim 13,
wherein at least the ring halves (32, 33) of the flat sealing ring (25) respectively have, at mutually opposite ends (90, 91), a press-in recess (92) and/or a press-in projection (93).

## Revendications

1. Entrée de ligne/câble (1), qui présente les éléments suivants :
un manchon d'introduction (2), lequel contient une section de connexion (4) et une bride d'installation (3), la bride d'installation (3) faisant saillie radialement vers l'extérieur adjacente à la section de connexion (4) ; et
une pièce de serrage (5), la pièce de serrage (5) pouvant être montée de manière amovible sur le manchon d'introduction (2) dans la direction de la bride d'installation (3) ;
tant le manchon d'introduction (2) que la pièce de serrage (5) pouvant être assemblés à partir d'au moins deux éléments individuels (7, 8 ; 9, 10) divisés dans la direction axiale (6) ;
les au moins deux éléments individuels (7, 8 ; 9, 10) divisés du manchon d'introduction (2) comme de la pièce de serrage (5) contenant des moyens (19) pour le guidage et/ou le positionnement, qui sont disposés le long d'arêtes de séparation (11, 12, 13, 14 ; 15, 16, 17, 18) correspondantes des au moins deux éléments individuels (7, 8 ; 9, 10), pour positionner les au moins deux éléments individuels (7, 8 ; 9, 10) les uns par rapport aux autres lorsque les au moins deux éléments individuels (7, 8 ; 9, 10) sont assemblés ;
les moyens (19) de guidage et/ou de positionnement étant réalisés comme des moyens (19) qui s'enclenchent l'un dans l'autre ; et
l'entrée de ligne/câble (1) pouvant être utilisée dans des atmosphères à risque d'explosion ;
**caractérisée en ce que** les au moins deux éléments individuels (7, 8) du manchon d'introduction (2) contiennent un assemblage à rainure et languette (73) d'étanchéité, qui s'étend dans la direction axiale le long des arêtes de séparation (11, 12, 13, 14) correspondantes, pour former un joint d'étanchéité entre les au moins deux éléments individuels (7, 8) du manchon d'introduction (2), lorsque les au moins deux éléments individuels (7, 8) du manchon d'introduction (2) sont assemblés.

2. Entrée de ligne/câble selon la revendication 1, l'entrée de ligne/câble (1) présentant en outre au moins une bague d'étanchéité (20) déformable radialement et/ou une bague de pression (21) déformable radialement.

3. Entrée de ligne/câble selon la revendication 1 ou 2,
la section de connexion (4) présentant, à son extrémité libre (22) pointant vers la pièce de serrage (5), des lamelles de serrage (23), en particulier des lamelles de serrage (23) disposées en forme d'iris,
et/ou l'entrée de ligne/câble (1) présentant une bague d'étanchéité plate (25) pouvant être montée sur une section d'insertion d'extrémité (24) du manchon d'introduction (2).

4. Entrée de ligne/câble selon la revendication 2,
la pièce de serrage (5) présentant un écrou-raccord (26) comprenant un col de pression (27),
et/ou au moins un des éléments suivants, la bague d'étanchéité (20), la bague de pression (21) et la bague d'étanchéité plate (25), peut être assemblé à partir d'au moins deux moitiés de bague ouvertes (28, 29 ; 30, 31 ; 32, 33).

5. Entrée de ligne/câble selon la revendication 4,
les arêtes de séparation (11, 12, 13, 14 ; 15, 16, 17, 18) des au moins deux éléments individuels (7, 8 ; 9, 10) et les arêtes de séparation (34, 35, 36, 37 ; 38, 39, 40, 41 ; 42, 43) des moitiés de bague (28, 29 ; 30, 31 ; 32, 33) s'étendant linéairement dans la direction axiale (6) ou s'étendant en forme de spirale, de manière échelonnée ou en forme d'onde dans la direction axiale (6).

6. Entrée de ligne/câble selon l'une quelconque des revendications précédentes, les moyens (19) pour le guidage et/ou le positionnement présentant des crochets d'encliquetage (44, 45) et/ou des tiges d'encliquetage (46, 47) et/ou des languettes d'encliquetage et/ou d'insertion (48, 49, 50, 51 ; 52, 53, 54, 55) avec des contre-éléments correspondants sous la forme d'ouvertures d'encliquetage et/ou d'insertion (56, 57 ; 58, 59 ; 60, 61).

7. Entrée de ligne/câble selon la revendication 6, les moyens (19) pour le guidage et/ou le positionnement présentant des crochets d'encliquetage (44, 45) et des tiges d'encliquetage (46, 47) le long de premières arêtes de séparation (11, 12 ; 15, 16) d'éléments individuels (7 ; 9) des au moins deux éléments individuels (7, 8 ; 9, 10) et des ouvertures d'encliquetage (56, 57 ; 58, 59 ; 60, 61) correspondantes le long de deuxièmes arêtes de séparation (13, 14 ; 17, 18) opposées d'éléments individuels (8 ; 10) des au moins deux éléments individuels (7, 8 ; 9, 10).

8. Entrée de ligne/câble selon la revendication 6 ou 7,
les moyens (19) pour le guidage et/ou le positionnement présentant des languettes d'insertion (48, 49, 50, 51 ; 52, 53, 54, 55) et des ouvertures d'insertion (62, 63, 64, 65 ; 66, 67, 68, 69) correspondantes sur des arêtes de séparation (11, 12 ; 13, 14 ; 15, 16 ; 17, 18) opposées d'éléments individuels (7, 8 ; 9, 10) des au moins deux éléments individuels (7, 8 ; 9, 10),
et/ou les ouvertures d'encliquetage (56, 57 ; 58, 59 ; 60, 61) étant réalisées en contre-dépouille.

9. Entrée de ligne/câble selon la revendication 7, les ouvertures d'encliquetage (56, 57 ; 58, 59) associées aux crochets d'encliquetage (44, 45) présentant des ouvertures d'engagement (70 ; 71) ouvertes radialement vers l'extérieur pour l'engagement d'un outil de détachement pour le détachement de l'encliquetage des crochets d'encliquetage (44, 45).

10. Entrée de ligne/câble selon l'une quelconque des revendications précédentes,
chaque élément individuel (7, 8) d'au moins le manchon d'introduction (2) présentant le long d'une arête de séparation (11, 14) une rainure (74, 75) et le long de l'autre arête de séparation (12, 13) un ressort (76, 77),
et en particulier un élément d'étanchéité (78) étant disposé dans la rainure (74, 75).

11. Entrée de ligne/câble selon la revendication 6,
les languettes d'insertion (48, 49, 50, 51 ; 52, 53, 54, 55) et les ouvertures d'insertion (62, 63, 64, 65 ; 66, 67, 68, 69) étant disposées par paires le long des arêtes de séparation (11, 12 ; 13, 14 ; 15, 16 ; 17, 18),
et/ou les languettes d'insertion (48, 49, 50, 51 ; 52, 53, 54, 55) des éléments individuels (7, 8, 9, 10) présentant des largeurs (79, 80) différentes dans la direction axiale (6).

12. Entrée de ligne/câble selon la revendication 4,
les moitiés de bague (28, 29 ; 30, 31 ; 32, 33) pouvant être connectées de manière amovible l'une à l'autre,
et en particulier les moitiés de bague (28, 29 ; 30, 31) présentant sur des arêtes de séparation (34, 36 ; 35, 37 ; 38, 40 ; 39, 41) opposées l'une à l'autre respectivement au moins une rainure d'insertion (81, 82 ; 83, 84) et une saillie d'insertion (85, 86 ; 87, 88) correspondante.

13. Entrée de ligne/câble selon la revendication 12, la rainure d'insertion (81, 82 ; 83, 84) et la saillie d'insertion (85, 86 ; 87, 88) étant réalisées en tant que liaison en queue d'aronde (89).

14. Entrée de ligne/câble selon la revendication 13,
au moins les moitiés de bague (32, 33) de la bague d'étanchéité plate (25) présentant à des extrémités (90, 91) opposées l'une à l'autre respectivement une cavité d'enfoncement (92) et/ou une saillie d'enfoncement (93).
